# DEMANDE DE BREVET EUROPEEN

(11) **EP 1 006 422 A1**
(43) Date de publication de la demande: **07.06.2000**
(21) Numéro de dépôt: 99410156.6
(22) Date de dépôt: 08.11.1999
(51) Int. Cl.: G05B 19/042

(54) **Dispositif de communication comportant un circuit d'alimentation et procédé d'alimentation pour un tel dispositif**

(30) Priorité: 04.12.1998 FR 9815549
(71) Demandeur: Schneider Electric Industries SA, 92500 Rueil-Malmaison (FR)
(72) Inventeur: Perrin, Alain, 38050 Grenoble Cédex 09 (FR)
(74) Mandataire: Jouvray, Marie-Andrée

(57) **Abrégé**

Le dispositif de communication comporte un circuit d'alimentation (8) connecté à un bus (2, 3), et un circuit de contrôle (19) à pente négative. Le circuit de contrôle (19) commande la limitation en courant du circuit d'alimentation en fonction d'une tension de bus (VB). Si un module (5D) connecté au bus dérive un courant pour faire baisser la tension de bus (VB), le circuit de contrôle commande la baisse d'un courant de limitation selon une pente négative.

## Description

L'invention concerne un dispositif de communication comportant :
- un réseau de transmission de données,
- des modules communicants connectés au réseau de transmission de données, et
- un circuit d'alimentation connecté audit réseau de transmission pour alimenter des modules communicants et permettre la transmission des données, ledit circuit d'alimentation comportant des premiers moyens de limitation de tension pour limiter une tension appliquée au réseau à une valeur maximale et des moyens de limitation d'un courant pour limiter un courant fourni par le circuit d'alimentation à une valeur maximale.

L'invention concerne un procédé d'alimentation pour un dispositif de communication.

Des dispositifs de communication connus sont décrits notamment dans les demandes de brevets européens EP 0367692 et EP 0370921. De tels dispositifs comportent un circuit d'alimentation connecté à un bus bifilaire sur lequel des modules communicants sont connectés. Le bus bifilaire constitue un réseau permettant la circulation d'informations et l'alimentation électrique desdits modules.

Dans ces dispositifs de communication, le circuit d'alimentation a des caractéristiques courant-tension rectangulaires. Ainsi, le circuit d'alimentation comporte une limitation en tension et une limitation en courant. Lors de la transmission d'information sur le bus, un module communicant fait temporairement chuter la tension du bus selon des impulsions représentatives de messages à envoyer.

Pour faire chuter la tension sur le bus, les modules comportent des composants électroniques de puissance capables de faire passer le courant maximum de limitation. Ces composants sont généralement coûteux et volumineux et donc incompatibles avec des points de communication qui doivent être installés dans des appareils comportant un faible volume.

L'invention a pour but un dispositif de communication permettant de réduire le volume et la complexité de modules de communication et un procédé d'alimentation permettant d'atteindre le même but.

Un dispositif selon l'invention, comporte des moyens de réduction de courant à pente négative connectés au circuit d'alimentation et au réseau de transmission de données pour commander la limitation en courant en fonction d'une tension du réseau.

Dans un mode de réalisation préférentiel, les moyens de réduction de courant comportent des entrées de mesure de tension connectées à des conducteurs du réseau.

De préférence, les moyens de réduction de courant comportent des entrées de mesure de tension connectées entre une entrée et une sortie du circuit d'alimentation.

Dans un mode de réalisation particulier, les moyens de réduction de courant comportent des premiers moyens de détection pour détecter une diminution d'une tension sur des conducteurs du réseau et pour déclencher le fonctionnement en pente négative si ladite tension est inférieure à un premier seuil.

Dans un mode de réalisation préférentiel, les moyens de réduction de courant comportent des seconds moyens de détection pour détecter une augmentation d'une tension sur des conducteurs du réseau et pour déclencher le fonctionnement en linéaire de si ladite tension est supérieure à un second seuil.

Avantageusement, les moyens de réduction de courant comportent des moyens de compensation en température.

De préférence, le dispositif comporte des seconds moyens de limitation en tension pour limiter la tension entre des conducteurs du réseau à une tension inférieure à la tension limitée par les premiers moyens de limitation.

Avantageusement, le dispositif comporte au moins un module communicant comportant un microcontrôleur ayant une entrée et une sortie connectées à un conducteur du réseau.

Avantageusement, le courant maximum de limitation limité par les moyens de limitation est supérieur à la valeur maximale d'un courant permanent admis pour la sortie du microcontrôleur.

Un procédé d'alimentation pour un dispositif de communication selon un mode de réalisation de l'invention comporte :
- une étape de mise en court-circuit d'une ligne d'un bus par un module communicant,
- une étape de détection de la chute de tension dans ladite ligne par un circuit de contrôle d'un circuit d'alimentation,
- une étape de fonctionnement en pente négative pour limiter le courant dans des lignes du bus de communication à une valeur basse,
- une étape d'ouverture de ligne d'un bus par ledit module communicant,
- une étape de détection de l'augmentation de tension dans ladite ligne, et
- une étape de fonctionnement linéaire pendant laquelle le courant dans des lignes du bus de communication est limité à une valeur élevée.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- La figure 1 représente un schéma d'un dispositif de communication de l'art antérieur ;
- La figure 2 représente les caractéristiques d'un circuit d'alimentation dispositif de communication selon la figure 1 ;
- Les figures 3 et 4 représentent des schémas blocs de dispositifs d'alimentation selon deux modes de réalisation de dispositifs de communication selon l'invention ;
- La figure 5 représente les caractéristiques d'un circuit d'alimentation d'un dispositif de communication selon les figures 3 ou 4 ;
- La figure 6 représente un schéma d'un module selon un mode de réalisation d'un dispositif de communication selon l'invention ;
- La figure 7 représente un schéma détaillé d'un dispositif d'alimentation selon un mode de réalisation d'un dispositif de communication selon l'invention ;
- La figure 8 représente un organigramme d'un procédé d'alimentation selon un mode de réalisation de l'invention ;
- La figure 9 représente un schéma d'un autre mode de réalisation d'un dispositif d'alimentation pour un dispositif de communication selon l'invention.

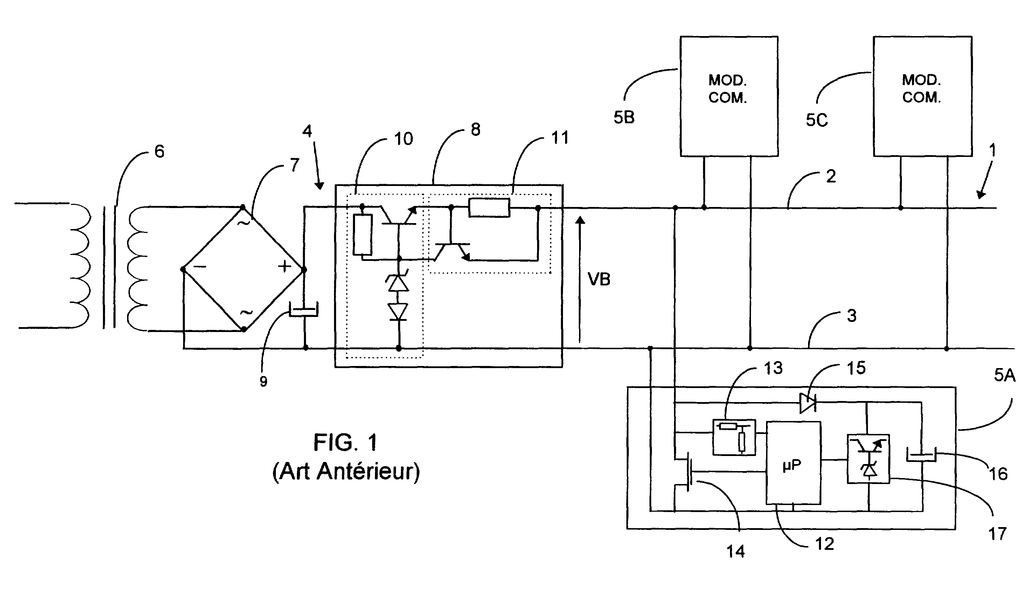

Le dispositif de communication de la figure 1 comporte un réseau 1 de transmission de données sous la forme d'un bus à deux fils, un premier fil 2 pour une ligne de tension positive et un second fil 3 pour une ligne de tension négative. Dans ce dispositif, un circuit d'alimentation 4 alimente les fils du bus en tension continue VB, et des modules communicants 5A, 5C, 5D connectés aux lignes du bus communicant et reçoivent une alimentation électrique à travers le bus.

Le circuit d'alimentation 4 du dispositif de la figure 1 comporte un transformateur 6, ayant un enroulement primaire destiné à être connecté à un secteur électrique, et un enroulement fournissant une très basse tension alternative à un pont redresseur 7. Des sorties positive et négative alimentent un circuit d'alimentation 8. Le filtrage de la tension redressée en sortie du pont est assuré par un condensateur 9 connecté entre lesdites sorties positive et négative.

Le circuit d'alimentation 8 comporte un régulateur de tension 10 pour limiter la tension fournie au bus de communication et un limiteur de courant 11 pour limiter le courant fourni par le circuit d'alimentation à une valeur maximale.

La figure 1 montre aussi le schéma d'un module communicant 5A. Ce module comporte un microprocesseur 12 ayant une entrée connectée à la ligne positive 2 à travers un atténuateur 13, et une sortie connectée à un transistor de puissance 14 pour commander la chute de tension dans le bus.

L'alimentation du module est assurée par une diode 15 et un condensateur 16 connectés en série entre les lignes positive 2 et négative 3. Lorsque le condensateur est chargé, il fournit une tension à un circuit de régulation 17 qui abaisse la tension avant d'alimenter le microprocesseur.

Sur le schéma de la figure 1 les deux régulateurs 10 et 11 coopèrent pour fournir une alimentation électrique ayant des caractéristiques tension-courant de forme rectangulaire.

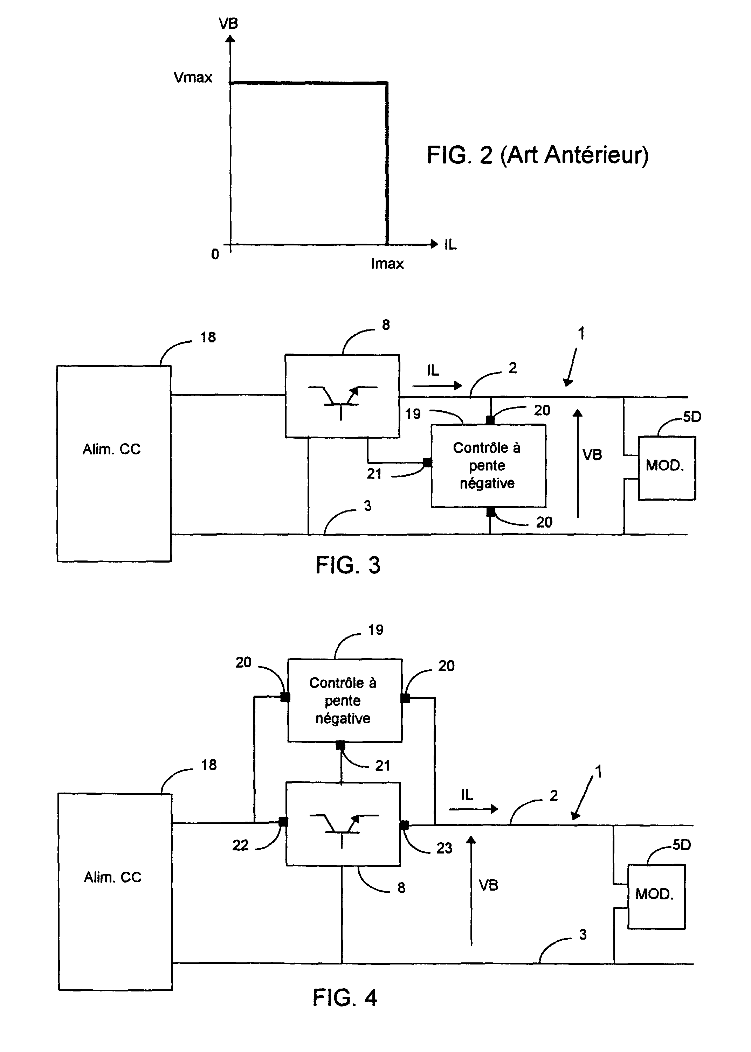

La figure 2 montre des caractéristiques de l'alimentation électrique fournie par les circuits 10 et 11. Une tension Vmax est limitée par le régulateur de tension 10, et un courant Imax est limité par le régulateur de courant 11. Le courant Imax assure la téléalimentation de modules.

Lorsque le transistor 14 est commandé pour faire chuter la tension VB du bus, le courant maximum limité Imax passe par ledit transistor 14. Ainsi, le transistor 14 est dimensionné pour pouvoir passer en permanence le courant Imax.

Dans un mode de réalisation de l'invention, des moyens de réduction de courant à pente négative sont connectés au circuit d'alimentation pour réduire le courant fourni à la ligne pendant que la tension du bus est basse.

Ainsi, le courant moyen passant par un transistor qui court-circuite les lignes 2 et 3 devient faible. La taille du transistor peut être réduite, ce qui permet de diminuer le volume et le coût des modules.

Avantageusement, le transistor peut être remplacé par une sortie d'un microprocesseur ou d'un microcontrôleur puisque le courant moyen est faible. De plus, lorsque le nombre de modules est réduit, et lorsque la longueur du bus est faible, la tension du bus peut être réduite et il n'est pas nécessaire d'utiliser un atténuateur 13, ni un circuit de régulation 17 pour adapter la tension de lignes du bus et les tensions de fonctionnement du microprocesseur.

Dans un mode de réalisation de la figure 3, le dispositif de communication comporte une source d'alimentation à courant continu 18 fournissant une tension continue stabilisée à un circuit d'alimentation 8, et un circuit de contrôle 19 à pente négative. Le circuit 19 comporte deux entrées 20 connectées entre les lignes 2 et 3 du bus de transmission, et une sortie 21 connectée au circuit d'alimentation 8 pour commander la diminution d'un courant de ligne IL selon une pente négative.

Lorsque la tension VB mesurée sur les entrées 20 baisse, le circuit de contrôle 19 commande le circuit d'alimentation 8 pour réduire le courant de limitation à une valeur basse compatible avec des transistors 14 de faibles dimensions intégrés dans des modules. Le fonctionnement à pente négative appelé aussi à retournement peut être réalisé de manière progressive, le courant de limitation variant entre une valeur maximale et une valeur minimale en fonction de la variation de la tension de ligne. Dans d'autres modes de réalisation, le fonctionnement à pente négative peut être réalisé par commutation. Dans ce cas, le circuit de contrôle 19 commande le circuit 8 pour la limitation de courant IL à une valeur maximale Imax si la tension VB est supérieure à un seuil V1, et commande la limitation à une valeur minimale Imin si la tension VB est inférieure audit seuil V1.

La figure 4 montre un autre mode de réalisation de l'invention. Sur ce schéma, le dispositif de contrôle 19 à pente négative a les entrées 20 connectées entre une entrée 22 et une sortie 23 du circuit d'alimentation 8.

Dans ce mode de réalisation, une baisse de la tension VB provoque une augmentation de la tension entre les entrées 20. Dans ce cas, le dispositif de contrôle 19 commande la diminution de la limitation du courant maximum lorsque la tension sur ces entrées 20 augmente.

Dans les deux modes de réalisation, la détection d'un signal représentatif de la tension VB permet de commander la limitation du courant. La baisse de la tension est détectée et le circuit de contrôle 20 commande la réduction de la limitation de courant.

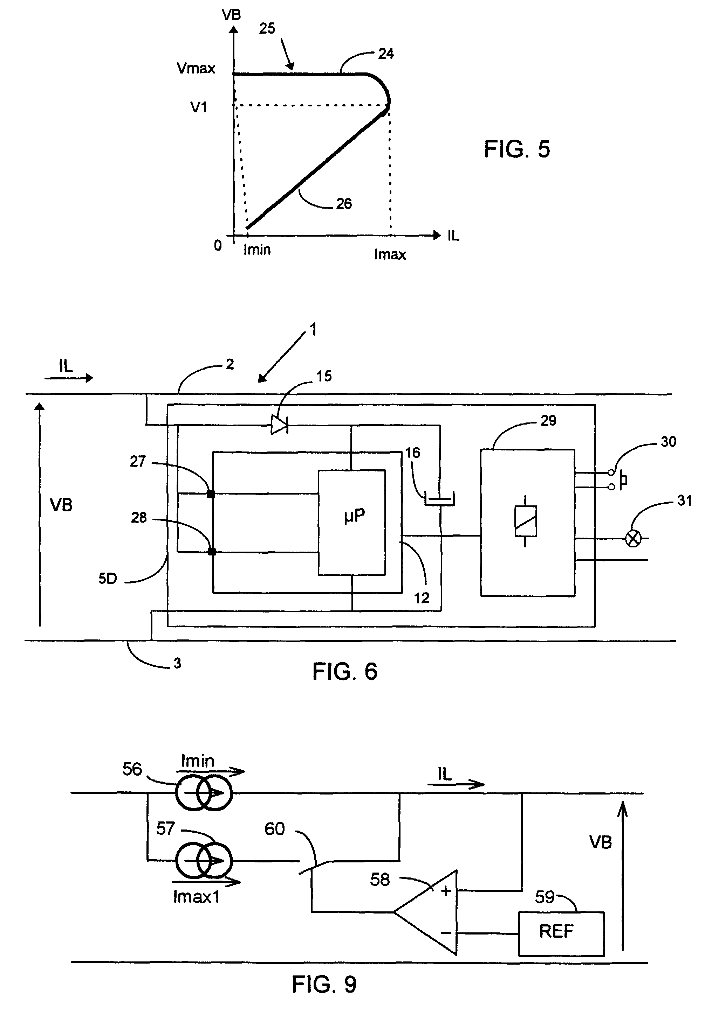

La figure 5 montre une courbe 24 des caractéristiques tension-courant d'un dispositif selon un mode de réalisation de l'invention.

La tension du bus VB est limitée à une valeur Vmax et le courant IL est limité à une valeur Imax

Lorsqu'aucun module ne dérive de courant pour émettre des impulsions d'informations, l'ensemble composé du circuit d'alimentation 8 et du circuit de contrôle 19 fonctionne en linéaire dans une zone 25 de la courbe 24 de la figure 5.

Dès qu'un module fait chuter la tension VB le courant est momentanément limité à la valeur Imax. Puis, lorsque la tension devient inférieure à une valeur V1, un fonctionnement en pente négative 26 est commandé par le circuit 19. La pente négative 26 ou le retournement modifie la valeur du courant de limitation qui atteint une valeur minimale Imin.

Lorsque le module ne fait plus chuter la tension par dérivation de courant, la tension VB augmente et le courant de limitation peut être limité à sa valeur maximale Imax. Cette valeur Imax permet d'alimenter les modules pendant que la tension de la ligne est à une valeur haute Vmax de limitation. La valeur du courant minimal de limitation Imin peut être inférieure au courant d'alimentation des modules, le module n'étant pas alimenté pendant que la tension VB est basse.

Avantageusement, le courant Imin de faible valeur permet de garantir une tension de ligne très basse. Par conséquent, la faible valeur de Imin autorise une longueur de ligne importante, une bonne immunité au signal de bruit sur le bus, et une tension d'alimentation Vmax faible.

Le schéma d'un module 5D d'un dispositif de communication selon un mode de réalisation de l'invention est représenté sur la figure 6. L'alimentation du module est assurée par une diode 15 et un condensateur 16 connectés en série entre les lignes 2 et 3. La tension du bus maximale Vmax étant compatible avec la tension d'alimentation d'un circuit microcontrôleur 12, le condensateur réservoir 16 alimente directement ledit circuit 12. Ainsi, une entrée 27 et une sortie 28 du circuit 12 sont connectées à la ligne 2 du bus puisque les tensions de fonctionnement sont compatibles.

Le circuit 12 comporte un microprocesseur sur lequel sont reliées l'entrée 27 et la sortie 28. De préférence, la sortie 28 peut être à collecteur ou à drain ouvert.

La sortie du microcontrôleur 28 peut absorber le courant de limitation minimal de manière permanente et le courant maximal Imax pendant un instant très bref. Par conséquent, le nombre de composants nécessaires au module est avantageusement réduit ainsi que le volume et le coût.

Le module de la figure 6 comporte aussi un circuit d'interface 29 connecté entre une sortie du microcontrôleur et des organes de commande 30 ou des actionneurs 31.

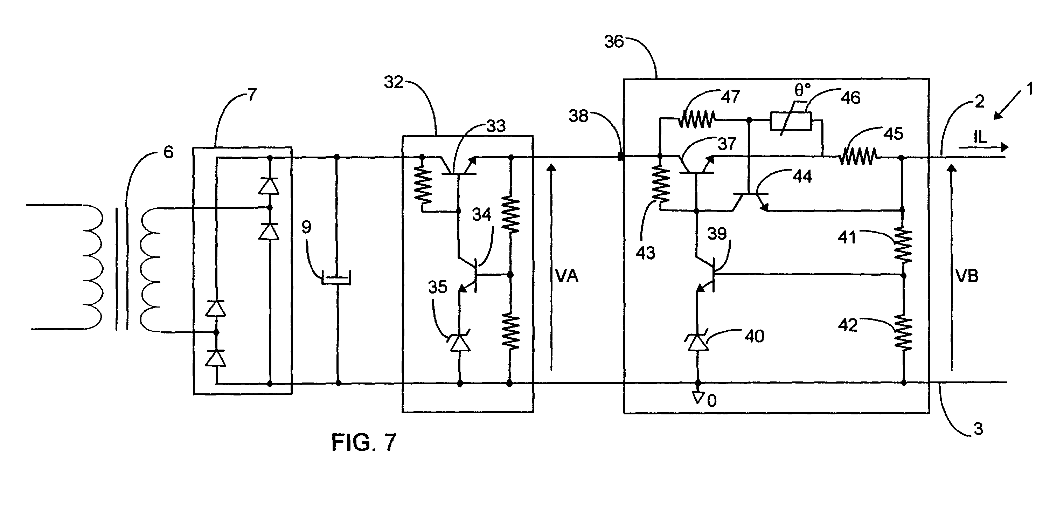

Un mode de réalisation détaillé d'un circuit d'alimentation associé à un circuit de contrôle à pente négative est représenté sur la figure 7. Sur cette figure, un premier régulateur de tension 32 reçoit en entrée une tension redressée et filtrée par le pont 7 et le condensateur 9, et fournit une tension régulée VA en sortie.

Le régulateur 32 comporte un transistor 33 disposé en régulateur série et commandé par un transistor 34 qui commande la régulation en fonction de la tension VA et la valeur d'une diode Zener 35.

La tension VA est appliquée à l'entrée d'un ensemble de limitation 36 qui regroupe les fonctions de limitation en tension Vmax et en courant Imax et Imin, et les fonctions du circuit de contrôle 19 en pente négative.

L'ensemble 36 comporte un transistor 37 disposé en régulateur série entre une entrée 38 et la ligne 2.

La limitation en tension Vmax est assurée par un transistor 39 connecté entre une base du transistor 37 et une diode Zener 40 connectée à la ligne 3 qui sert de référence de tension. Ainsi le transistor 39 compare une tension représentative de VB qui est appliquée à sa base à travers un pont diviseur 41, 42 avec la tension de la diode Zener pour commander le transistor 37. Les collecteurs des transistors 37 et 39 sont polarisés par une résistance 43 connectée entre l'entrée 38 et lesdits collecteurs.

La limitation du courant est réalisée par un transistor 44 connecté entre la sortie 2 et la base du transistor 37, une résistance 45 connectée en série entre l'émetteur du transistor 37 et la ligne 2 positive, une résistance 46 connectée entre la résistance 45 et la base du transistor 44, et une résistance 47 de polarisation connectée entre l'entrée 38 et la base dudit transistor 44.

Lorsque le courant IL augmente, la tension aux bornes de la résistance 45 augmente et la tension appliquée à la base du transistor 44 à travers la résistance 46 augmente. Dès que la tension sur la base dépasse le seuil de conduction de la base du transistor 44, un courant circule dans ladite base, la conduction du transistor 44 augmente et la conduction du transistor 37 diminue. Ainsi, une régulation en courant maximal Imax est réalisée. La résistance 47 de forte valeur agit peu sur le fonctionnement.

Dès que la tension VB baisse, l'émetteur du transistor 44 a alors un potentiel proche de celui de la ligne 3. Par conséquent, un courant plus important passe par la résistance 47 et alimente la base du transistor 44. Ainsi, la tension base-émetteur du transistor 37 diminue, et le courant traversant le transistor 37 se trouve fortement limité à une faible valeur. Le transistor 37 peut se trouver en état de blocage, et le courant minimal est assuré par le courant circulant dans les résistances 47, 46 et 45 et la résistance 43 à travers le transistor 44. La résistance 46 est de préférence une résistance à coefficient de température négatif pour comparer les dérives en température des transistors et assurer ainsi des limitations précises en courant maximal Imax.

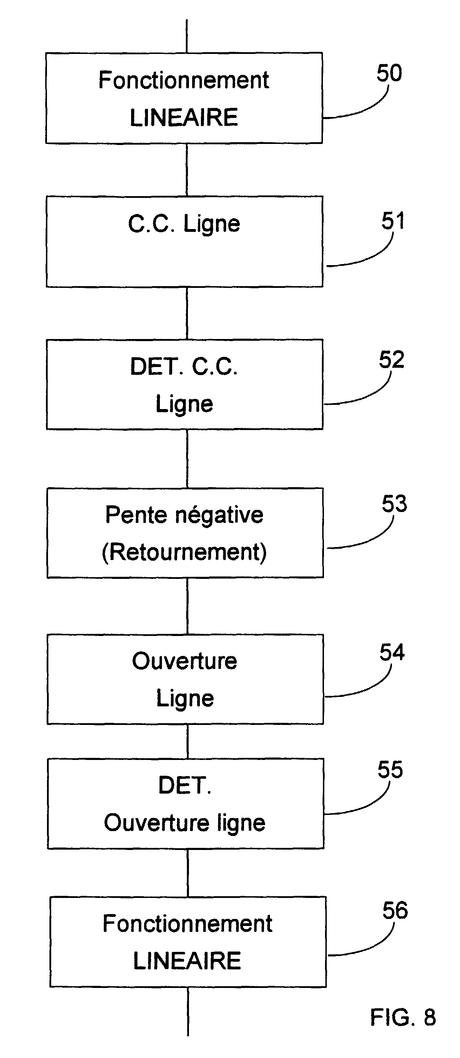

La figure 8 montre un organigramme correspondant à un procédé d'alimentation selon un mode de réalisation de l'invention, pendant la transmission d'une impulsion par un module communicant.

Dans une première étape 50, l'alimentation fonctionne en linéaire, la tension VB est haute et le courant de limitation est maximum.

A une étape 51, la ligne est mise en court-circuit, le courant du bus IL est dérivé directement entre les lignes 2 et 3 et la tension VB baisse. Cette baisse de tension est détectée à une étape 52, et un fonctionnement en pente négative ou à retournement se produit à une étape 53, le courant de ligne est alors limité à une valeur maximale.

Ensuite, à une étape 54, la ligne est ouverte et la tension VB augmente. L'augmentation de la tension du bus est détectée à une étape 55 et, à une étape 56, le dispositif passe de nouveau en fonctionnement linéaire. Le courant de limitation est alors en limitation maximale Imax.

Un autre mode de réalisation est représenté sur la figure 9. Dans ce cas, un premier limiteur de courant 56 limite le courant à Imin et un second limiteur de courant 57 limite le courant à une valeur Imax1. Un comparateur 58 compare le la tension VB du bus à une référence 59 et commande un interrupteur électronique 60 pour commander la valeur du courant limité dans le bus. Si la tension VB est inférieure à la référence 59, l'interrupteur 60 est ouvert et le courant IL est limité à Imin. Puis, lorsque VB est supérieure à la référence 59 le comparateur commande la fermeture de l'interrupteur 60 et le courant IL est limité à Imax. Dans ce cas, Imax est égal à (Imin + Imax1).

Dans ce mode de réalisation, le passage du courant de limitation d'une valeur Imax à une valeur Imin se fait très rapidement. Ainsi, le fonctionnement en pente négative signifie aussi bien un passage progressif qu'un passage rapide ou un passage commuté entre Imax et Imin.

Les modes de réalisation des dispositifs décrits ci-dessus comportent des composants électroniques individuels. Cependant d'autres modes de réalisation de l'invention sont possibles, par exemple des dispositifs comportant des circuits opérationnels intégrés tels que des amplificateurs, des comparateurs ou des régulateurs. Il est également possible de réaliser les fonctions de régulation ou de contrôle avec des circuits analogiques, numériques ou programmables.

## Revendications

1. Dispositif de communication comportant :
- un réseau (1, 2, 3) de transmission de données,
- des modules communicants (SA, 5B, 5C) connectés au réseau de transmission de données, et
- un circuit d'alimentation (8) connecté audit réseau de transmission pour alimenter des modules communicants et permettre la transmission des données, ledit circuit d'alimentation comportant des premiers moyens de limitation de tension (10, 32) pour limiter une tension appliquée au réseau à une valeur maximale (Vmax) et des moyens de limitation d'un courant (11) pour limiter un courant fourni par le circuit d'alimentation à une valeur maximale (Imax),
dispositif caractérisé en ce qu'il comporte des moyens de réduction de courant (19) à pente négative connectés au circuit d'alimentation (8) et au réseau de transmission (1, 2, 3) de données pour commander la limitation en courant en fonction d'une tension du réseau (VB).

2. Dispositif de communication selon la revendication 1, caractérisé en ce que les moyens de réduction de courant comportent des entrées (20) de mesure de tension connectées à des conducteurs (2, 3) du réseau.

3. Dispositif de communication selon l'une des revendications 1 ou 2, caractérisé en ce que les moyens de réduction de courant comportent des entrées de mesure de tension (20) connectées entre une entrée (22) et une sortie (23) du circuit d'alimentation.

4. Dispositif de communication selon l'une quelconque des revendications 1 à 3, caractérisé en ce que les moyens de réduction de courant (19) comportent des premiers moyens de détection (19, 20, 44, 47) pour détecter une diminution d'une tension sur des conducteurs du réseau et pour déclencher le fonctionnement en pente négative (26) si ladite tension est inférieure à un premier seuil (V1).

5. Dispositif de communication selon l'une quelconque des revendications 1 à 4, caractérisé en ce que les moyens de réduction de courant (19) comportent des seconds moyens de détection (19, 20, 44, 47) pour détecter une augmentation d'une tension sur des conducteurs du réseau et pour déclencher le fonctionnement en linéaire (25) de si ladite tension est supérieure à un second seuil (V1).

6. Dispositif de communication selon l'une quelconque des revendications 1 à 5, caractérisé en ce que les moyens de réduction de courant (19) comportent des moyens de compensation en température (46).

7. Dispositif de communication selon l'une quelconque des revendications 1 à 6, caractérisé en ce qu'il comporte des seconds moyens de limitation en tension (39, 40, 37) pour limiter la tension entre des conducteurs du réseau à une tension inférieure à la tension limitée par les premiers moyens de limitation (10, 32).

8. Dispositif de communication selon l'une quelconque des revendications 1 à 7, caractérisé en ce qu'il comporte au moins un module communicant (5D) comportant un microcontrôleur ayant une entrée (27) et une sortie (28) connectées à un conducteur (2) du réseau (1).

9. Dispositif de communication selon la revendication 8, caractérisé en ce que le courant maximum (Imax) de limitation limité par les moyens de limitation est supérieur à la valeur maximale d'un courant permanent admis pour la sortie du microcontrôleur.

10. Procédé d'alimentation pour un dispositif de communication comportant :
- une étape de mise en court-circuit (51) d'une ligne (2, 3) d'un bus par un module communicant (5A),
- une étape de détection de la chute de tension (52) dans ladite ligne par un circuit de contrôle d'un circuit d'alimentation,
- une étape de fonctionnement en pente négative (53, ) pour limiter le courant dans des lignes du bus de communication à une valeur basse (Imin),
- une étape d'ouverture (51) de ligne d'un bus par ledit module communicant,
- une étape de détection de l'augmentation de tension (55) dans ladite ligne, et
- une étape de fonctionnement linéaire (50, 56) pendant laquelle le courant dans des lignes du bus de communication est limité à une valeur élevée (Imax).
